(19) Europäisches Patentamt
European Patent Office
Office européen des brevets

(11) **EP 3 960 811 A1**

(12) **EUROPEAN PATENT APPLICATION**
published in accordance with Art. 153(4) EPC

(43) Date of publication:
**02.03.2022 Bulletin 2022/09**

(21) Application number: **20795181.5**

(22) Date of filing: **20.04.2020**

(51) International Patent Classification (IPC):
**C08L 21/00** (2006.01)    **A41D 19/00** (2006.01)
**A41D 19/04** (2006.01)    **C08K 3/36** (2006.01)
**C08L 1/02** (2006.01)    **C08L 71/02** (2006.01)
**C08L 91/00** (2006.01)

(52) Cooperative Patent Classification (CPC):
**A41D 19/00; A41D 19/04; C08K 3/36; C08L 1/02;**
**C08L 21/00; C08L 71/02; C08L 91/00**

(86) International application number:
**PCT/JP2020/017105**

(87) International publication number:
**WO 2020/218263 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2019 JP 2019083522**

(71) Applicant: **Nippon Paper Industries Co., Ltd.
Tokyo 114-0002 (JP)**

(72) Inventors:
• **TAKAKI, Mei**
  **Tokyo 114-0002 (JP)**
• **ITO, Kotaro**
  **Tokyo 114-0002 (JP)**
• **KATO, Hayato**
  **Tokyo 114-0002 (JP)**

(74) Representative: **Müller-Boré & Partner
Patentanwälte PartG mbB
Friedenheimer Brücke 21
80639 München (DE)**

(54) **DIPPING LATEX, RUBBER COMPOSITION, AND PRODUCTION METHODS THEREFOR**

(57)    An object of the present invention is to provide a rubber composition that has tensile strength at break and tensile elongation superior to a rubber composition produced without mixing a cellulose nanofiber and to provide a latex immersion liquid that is a raw material for the rubber composition and is used at a latex immersion step.

Namely, the present invention provides a latex immersion liquid that includes (1) a rubber latex, (2) a modified cellulose nanofiber having an average fiber length of 200-400 nm, and (3) a defoaming agent and also provides a rubber composition produced through a latex immersion step using the obtained latex immersion liquid.

**Description**

Field

The present invention relates to a latex immersion liquid, a rubber composition, and a method for producing the same. More specifically, the present invention relates to a latex immersion liquid, a rubber composition produced through a latex immersion step using the latex immersion liquid, and a method for producing the same.

Background

Rubber products made of thin rubber films such as rubber gloves are produced through a latex immersion step. For example, Patent Literature 1 has described a method for producing a rubber glove including steps of immersing a mold corresponding to the three-dimensional shape of a glove into a latex composition including a rubber or a resin and blended with a biomass nanofiber, thereafter, pulling up the immersed mold, and drying and solidifying the latex composition attached to the mold.

Citation List

Patent Literature

Patent Literature 1: Japanese Patent Application Laid-open No. 2015-094038

Summary

Technical Problem

The latex composition used in the method of Patent Literature 1, however, has a high viscosity. In the case where a plate serving as a mold is immersed in a high-viscosity latex composition, the immersion liquid is not uniformly adsorbed on the plate to be immersed and thus holes are formed in the rubber product to be produced. Consequently, a uniform rubber film cannot be obtained and thus the rubber product has low strength. In addition, the immersion liquid mixed with a cellulose nanofiber also has a high viscosity and thus the obtained rubber product cannot provide sufficient strength.
An object of the present invention is to enable the production of a rubber product by the latex immersion step by controlling the viscosity of the immersion liquid obtained by mixing a dispersion liquid of a rubber component such as a latex and a cellulose nanofiber and stirring the resultant mixture. The present invention further provides a rubber composition having physical properties higher than the tensile strength at break and tensile elongation of a rubber composition produced without mixing the cellulose nanofiber.

Solution to Problem

The present invention provides the following <1> to <9>.

<1> A latex immersion liquid comprising the following (1) to (3) :

(1) a rubber latex;
(2) a modified cellulose nanofiber having an average fiber length of 200 nm-400 nm; and
(3) a defoaming agent.

<2> The latex immersion liquid according to <1>, wherein the (2) includes an oxidized cellulose nanofiber.
<3> The latex immersion liquid according to <2>, wherein the oxidized cellulose nanofiber is a TEMPO-oxidized cellulose nanofiber.
<4> The latex immersion liquid according to <3>, wherein an amount of carboxy groups of the TEMPO-oxidized cellulose nanofiber is 0.2 mmol/g-2.0 mmol/g.
<5> The latex immersion liquid according to any one of <1> to <4>, wherein the (3) includes at least one compound selected from the group consisting of polyether, silica, and a mineral oil.
<6> The latex immersion liquid according to any one of <1> to <5>, wherein a B type viscosity after a lapse of 24 hours from production is 10-500 mPa·s.
<7> A method for producing a latex immersion liquid, the method comprising:

mixing (1) and (2) to give a mixed liquid;
aging the mixed liquid; and
spraying a component (3) to the mixed liquid after aging.

<8> A rubber composition comprising the latex immersion liquid according to any one of <1> to <6> as a raw material.
<9> A method for producing a rubber composition using the latex immersion liquid according to any one of <1> to <6> as a raw material.

The cellulose nanofiber aqueous dispersion has a high viscosity and thus the immersion liquid obtained by being blended to a latex usually has a high viscosity. Therefore, in the latex immersion step, the immersion liquid is not uniformly adsorbed on a plate and thus a rubber film having a uniform thickness cannot be obtained. Use of a short fiber cellulose nanofiber providing a low viscosity allows the viscosity when the latex and the cellulose nanofiber are stirred to be controlled and the immersion liquid to be uniformly adsorbed on the plate. Advantageous Effects of Invention

According to the present invention, a low-viscosity latex immersion liquid can be obtained. A uniform film can be formed on the surface of the mold immersed in the latex immersion liquid according to the present invention and thus the obtained rubber composition can exhibit strength higher than that of a rubber composition prepared using only natural rubber. Therefore, the present invention is also useful for producing various rubber compositions, for example, rubber compositions having complicated shapes.

Description of Embodiments

Hereinafter, the present invention will be described. In the present specification, the value range including "-" includes the end values. In other words, "X-Y" includes the values X and Y at both ends thereof.

[1. Latex immersion liquid]

The latex immersion liquid according to the present invention includes at least the components (1) to (3). The latex immersion liquid according to the present invention can be used at the latex immersion step during the production of the rubber composition.

<Component (2): Modified cellulose nanofiber>

In the present specification, a cellulose nanofiber (CNF) is a fine fiber formed by subjecting the cellulose raw material such as pulp to fibrillation to a nanometer level and an average fiber diameter is about 2-500 nm. The average fiber diameter and average fiber length of the modified cellulose nanofiber can be determined by averaging each of the fiber diameters and fiber lengths obtained from the results of observing each fiber using an atomic force microscope (AFM) or a transmission electron microscope (TEM).

In the present specification, the modified cellulose nanofiber means a cellulose nanofiber obtained from a cellulose raw material through modification (usually chemical modification) and fibrillation. In the present specification, the chemical modification is chemically performed modification and examples thereof include anion modification and cation modification. Examples of the method for producing the modified cellulose nanofiber include a method for subjecting the modified cellulose obtained by modification of the cellulose raw material (for example, chemical modification such as anion modification (for example, oxidation (carboxylation), etherification, and phosphoric acid esterification) and cation modification) to the fibrillation (such as defibration (nano-defibration)). The average fiber length and average fiber diameter of the fine fiber can be adjusted by the conditions of the chemical modification treatment (for example, an oxidation treatment), fibrillation treatment (for example, a defibration treatment), and, if necessary, an alkaline hydrolysis treatment.

The average fiber diameter of the modified cellulose nanofiber is usually 2 nm-500 nm, preferably 2 nm-100 nm, more preferably 2 nm-50 nm, further preferably 2-15 nm, and further more preferably 2 nm-10 nm. The average fiber length is 200 nm-400 nm, preferably 200 nm-350 nm, and more preferably 200 nm-330 nm. Use of the modified cellulose nanofiber that satisfies at least one of the above average fiber diameter and average fiber length, preferably at least satisfies the average fiber length, and more preferably satisfies both allows an increase in the viscosity of the immersion liquid to be reduced. This allows the rubber composition without holes to be produced with respect to the rubber composition produced through the latex immersion step and the rubber composition having higher tensile strength at break and elongation at break than those of the rubber composition produced using natural rubber alone to be provided.

In the present specification, a modified cellulose nanofiber having an average fiber length of 200 nm-400 nm may be referred to as a short-fiber cellulose nanofiber.

The average aspect ratio of the modified cellulose nanofiber is usually 50 or more. The upper limit is not particularly limited and is usually 1,000 or less. The average aspect ratio can be calculated by the following formula:

$$\text{Aspect ratio} = \text{Average fiber length/Average fiber}$$
$$\text{diameter}$$

(Cellulose raw material)

The cellulose raw material is not particularly limited. Examples thereof include pulp, powdered cellulose obtained by crushing pulp with an apparatus such as a high-pressure homogenizer and a mill, and microcrystalline cellulose powder obtained by purifying the pulp by chemical treatment such as acid hydrolysis. Other examples include cellulose raw materials derived from plants such as kenaf, hemp, rice plant, bagasse, bamboo, and jute, cellulose raw materials derived from microorganisms such as algae and acetobacter, agricultural land waste, and cloth. Examples of wood-derived pulp include pulp obtained by kraft-cooking after hydrolysis treatment (DKP: for example, softwood kraft dissolving pulp), unbleached softwood kraft pulp (NUKP), bleached softwood kraft pulp (NBKP), unbleached hardwood kraft pulp (LUKP), bleached hardwood kraft pulp (LBKP), unbleached softwood sulfite pulp (NUSP), bleached softwood sulfite pulp (NBSP), thermomechanical pulp (TMP), softwood dissolving pulp, hardwood dissolving pulp, recycled pulp, and used paper pulp. Of these materials, DKP, the powdered cellulose, and the microcrystalline cellulose powder are preferable. Use of these materials allows the cellulose nanofiber that provides a dispersion liquid (usually an aqueous dispersion liquid) having a lower viscosity even at a high concentration to be produced. In addition, the hardwood-derived cellulose raw material is also preferable because the hardwood-derived cellulose raw material allows the cellulose nanofiber that provides a low-viscosity dispersion liquid to be produced with low power consumption. Use of the modified cellulose nanofiber having the above average fiber length obtained from these cellulose raw materials as the component (2) allows an increase in the viscosity of the latex immersion liquid to be reduced.

(Chemical modification)

The modified cellulose nanofiber may be either an anion-modified cellulose nanofiber or a cation-modified cellulose nanofiber. In the case where optional components such as a filler and a dispersing agent are blended together with the modified cellulose nanofiber in the mixed liquid at the time of obtaining the immersion liquid, the modified cellulose nanofiber is preferably selected so that the optional components can be excellently dispersed. In the case where an anionic polymer compound is used as the dispersing agent, the anion-modified cellulose nanofiber is preferable because a synergistic effect for reducing the aggregation of the filler can be easily obtained.
The anion-modified cellulose nanofiber is a cellulose nanofiber into which a functional group has been introduced by anion modification. Examples of the functional group introduced by the anion modification include a carboxy group, a carboxyalkyl group, a sulfone group, a phosphoric acid ester group, and a nitro group. Of these functional groups, the carboxy group, the carboxyalkyl group, and the phosphoric acid ester group are preferable and the carboxy group is more preferable.

(Salt type and acid type)

The functional group introduced by chemically modifying the cellulose raw material may be an acid type functional group or a salt type functional group. For example, when the cellulose raw material is oxidized, a hydroxy group is modified into a carboxy group and the cellulose fiber after oxidation usually includes both group represented by -COOH (an acid-type carboxy group) and group represented by -COO- (a salt-type carboxy group).
Examples of the counter cation of the salt-type functional group include ions of alkali metals such as sodium and potassium and an ammonium ion, which can be selected depending on the type of the functional group. The ion that improves a defibration property and dispersibility of the modified cellulose is preferably selected.

(Oxidation (carboxylation))

An oxidized cellulose can be obtained by oxidizing (carboxylation) the cellulose raw material by known methods. The amount of carboxy groups in the oxidized cellulose is preferably 0.2 mmol/g or more and more preferably 0.5 mmol/g or more relative to the absolute dried mass of the oxidized cellulose nanofiber. This allows a highly transparent and uniform nanofiber dispersion liquid to be obtained without requiring a large amount of energy during defibration. In addition, when the modified cellulose nanofiber is blended with the latex, the residual coarse substances (which can be the starting point of break) such as an undefibrated fiber can be reduced. The upper limit is usually 2.0 mmol/g or less. Therefore, the amount of the carboxy groups of the oxidized cellulose nanofiber, which is preferably 0.2-2.0 mmol/g and more preferably 0.5-2.0 mmol/g, is usually the same as that of the oxidized cellulose before the fibrillation. The amount of carboxy groups can be calculated from the fluctuation of electrical conductivity.

As one example of the oxidation (carboxylation) method, a method for oxidizing the cellulose raw material in water using an oxidizing agent in the presence of a reagent selected from the group consisting of a N-oxyl compound, a bromide, and an iodide or a combination of two or more of them can be exemplified. This oxidation reaction allows the primary hydroxy group at the C6-position of the glucopyranose ring on the cellulose surface to be selectively oxidated and the oxidized cellulose having an aldehyde group and a carboxy group (-COOH) or carboxylate group (-COO⁻) on the surface to be obtained. The concentration of the cellulose at the time of the reaction is not particularly limited and is preferably 5% by mass or less.

The N-oxyl compound refers to a compound that can generate a nitroxy radical. As the N-oxyl compound, any compound can be used as long as the compound promotes the target oxidation reaction. Example of the N-oxyl compound include 2,2,6,6-tetramethylpiperidine-1-oxy radical (TEMPO) and the derivative thereof (for example, 4-hydroxy TEMPO). In the present specification, an oxidized cellulose nanofiber using one or more compounds selected from TEMPO and derivatives thereof may be referred to as a TEMPO-oxidized cellulose nanofiber.

The amount of the used N-oxyl compound is not particularly limited as long as the amount is a catalytic amount that can oxidize the cellulose serving as the raw material. For example, 0.01-10 mmol is preferable, 0.01-1 mmol is more preferable, and 0.05-0.5 mmol is further preferable relative to 1 g of the absolutely dried cellulose. In addition, the amount is preferably about 0.1-4 mmol/L relative to the reaction system.

The bromide refers to a compound containing bromine and examples thereof include alkali metal bromides that can be dissociated and ionized in water. In addition, the iodide refers to a compound containing iodine and examples thereof include alkali metal iodides. The amount of the used bromide or iodide can be selected within a range where the oxidation reaction can be promoted. The total amount of the bromide and the iodide is, for example, preferably 0.1-100 mmol, more preferably 0.1-10 mmol, and further preferably 0.5-5 mmol relative to 1 g of the absolutely dried cellulose.

As the oxidizing agent, known oxidizing agents can be used. For example, halogens, hypohalous acids, halous acids, perhalogenic acids, or salts thereof, halogen oxides, and peroxides can be used. Of these oxidizing agents, sodium hypochlorite, which is inexpensive and has a low environmental load, is preferable. The amount of the used oxidizing agent is, for example, preferably 0.5-500 mmol, more preferably 0.5-50 mmol, further preferably 1-25 mmol, and most preferably 3-10 mmol relative to 1 g of the absolutely dried cellulose. In addition, for example, 1-40 mol of the oxidizing agent is preferable relative to 1 mol of the N-oxyl compound.

The oxidation of the cellulose allows the reaction to promote efficiently even under relatively mild conditions. Therefore, the reaction temperature is preferably 4-40°C and may be a room temperature of about 15-30°C. As the reaction promotes, carboxy groups are generated in the cellulose and thus lowering of the pH of the reaction liquid is observed. In order to promote the oxidation reaction efficiently, the pH of the reaction liquid is preferably retained at usually about 8-12 and preferably about 10-11 by adding an alkaline solution such as a sodium hydroxide aqueous solution. Water is preferable as the reaction medium because water has advantages such as excellent handleability and less occurrence of side reactions.

The reaction time in the oxidation reaction can be appropriately set according to the degree of progress of the oxidation and is usually 0.5-6 hours, for example, about 0.5-4 hours.

In addition, the oxidation reaction may be performed separately in two stages. For example, the oxidized cellulose obtained by filtering after the completion of the reaction in the first stage is oxidized again under the same or different reaction conditions, whereby the oxidized cellulose can be efficiently oxidized without reaction inhibition caused by sodium chloride produced as a by-product in the first stage reaction.

As another example of the oxidation (carboxylation) method, a method for oxidizing the cellulose by contacting a gas including ozone with the cellulose raw material can be exemplified. This oxidation reaction allows hydroxy groups at 2-position and 6-position of the glucopyranose ring to be oxidized and, at the same time, decomposition of the cellulose chain to occur. The ozone concentration in the gas including ozone is preferably 50-250 g/m³ and more preferably 50-220 g/m³.

The amount of the added ozone is preferably 0.1-30 parts by mass and more preferably 5-30 parts by mass relative to the cellulose raw material when the solid content of the cellulose raw material is determined to be 100 parts by mass. The ozone treatment temperature is preferably 0-50°C and more preferably 20-50°C. The ozone treatment time is not particularly limited and is usually about 1-360 minutes and preferably about 30-360 minutes. The ozone treatment conditions within the ranges described above allows excessive oxidization and decomposition of the cellulose to be prevented and the yield of the oxidized cellulose to be possibly excellent. After the ozone treatment, the ozone-treated cellulose may be further subjected to additional oxidation treatment using an oxidizing agent. The oxidizing agent used for the additional oxidization treatment is not particularly limited. Examples of the oxidizing agent include chlorine-based compounds such as chlorine dioxide and sodium chlorite, oxygen, hydrogen peroxide, persulfuric acid, and peracetic acid. For example, the additional oxidation treatment can be performed by preparing an oxidizing agent solution by dissolving the oxidizing agent in water or a polar organic solvent such as alcohol, and immersing the cellulose raw material in the solution.

The amount of the carboxy group in the oxidized cellulose can be adjusted by controlling the reaction conditions such as the amount of the added oxidizing agent and the reaction time described above.

(Etherification)

An etherified cellulose can be obtained by etherifying the cellulose raw material by known methods. Examples of etherification include etherification by reaction selected from methylation, ethylation, cyanoethylation, hydroxyethylation, hydroxypropylation, ethyl-hydroxyethylation, and hydroxypropyl-methylation. Carboxyalkylation is preferable and carboxymethylation is more preferable. The modified cellulose (carboxyalkylated cellulose) obtained through the carboxyalkylation preferably has a structure in which at least one of the hydroxy groups in the cellulose has a carboxyalkylated structure. The degree of carboxyalkyl group substitution (DS) per anhydrous glucose unit of the carboxyalkylated cellulose is preferably 0.01-0.50. DS is the proportion of groups substituted with carboxyalkyl groups (the number of carboxyalkyl groups per glucose residue) in the hydroxy groups that each anhydrous glucose (glucose residue) constituting cellulose originally has. DS can be calculated from the amount of the carboxyalkyl groups.

Examples of the carboxyalkylation method include a method in which the cellulose-based raw material as a starting material is mercerized and thereafter etherified. The following method can be exemplified as one example of the carboxymethylation method. The cellulose is used as the starting material. As the solvent, 3-20 times by mass of water, lower alcohol (for example, water, methanol, ethanol, N-propyl alcohol, isopropyl alcohol, N-butanol, isobutanol, and tertiary butanol) or a mixed medium of water and the lower alcohol is used. In the case where the lower alcohol is mixed, the mixing ratio of the lower alcohol is usually 60-95% by mass. Examples of the mercerizing agent include alkali metal hydroxides such as sodium hydroxide and potassium hydroxide. The amount of the mercerizing agent is preferably 0.5-20 times by mole per anhydrous glucose residue of the starting material. Mercerization is performed by mixing the starting material, the solvent, and the mercerizing agent. The reaction temperature for mercerization is usually 0-70°C and preferably 10-60°C. The reaction time is usually 15 minutes-8 hours and preferably 30 minutes-7 hours. Thereafter, the carboxymethylating agent is added into the system to perform the etherification reaction. The amount of the added carboxymethylating agent per glucose residue is usually 0.05-10.0 times by mole. The reaction temperature is usually 30-90°C and preferably 40-80°C. The reaction time is usually 30 minutes-10 hours and preferably 1 hour-4 hours.

In the present specification, "carboxymethylated cellulose", which is a kind of the modified cellulose, means that at least a part of the fibrous shape is maintained even when the carboxymethylated cellulose is dispersed in water. Therefore, this carboxymethylated cellulose is distinguished from the carboxymethyl cellulose as a water-soluble polymer exemplified as a dispersing agent in the present specification. When the aqueous dispersion liquid of the "carboxymethylated cellulose" is observed with an electron microscope, a fibrous substance can be observed. On the other hand, when the aqueous dispersion liquid of the carboxymethyl cellulose, which is a kind of water-soluble polymer, is observed, no fibrous substance is observed. In addition, the peak of cellulose type I crystal can be observed when the "carboxymethylated cellulose" is measured by X-ray diffraction, whereas the cellulose type I crystal is not observed when carboxymethyl cellulose, which is the water-soluble polymer, is measured.

(Phosphoric acid esterification)

A phosphoric acid-esterified cellulose can be obtained by a method of mixing a powder or an aqueous solution of a phosphoric acid-based compound A with the cellulose raw material or a method of adding the aqueous solution of the phosphoric acid-based compound A to the slurry of the cellulose raw material.

Examples of the phosphoric acid-based compound A include phosphoric acid, polyphosphoric acid, phosphorous acid, phosphonic acid, polyphosphonic acid, and esters thereof. These compounds may be in the form of salts. The phosphoric acid-based compound A is preferably a compound having a phosphoric acid group because the compound is inexpensive and easy to handle and the defibration efficiency may be improved by introducing the phosphoric acid group into the cellulose raw material such as pulp. Examples of the compound having a phosphoric acid group include phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. These compounds can be used singly or in combination of two or more of them. Of these compounds, phosphoric acid, the sodium salts of phosphoric acid, the potassium salts of phosphoric acid, and the ammonium salts of phosphoric acid are preferable from the viewpoints of high efficiency of introducing the phosphoric acid group, easy defibration, and easy applicability in industry. Sodium dihydrogen phosphate and disodium hydrogen phosphate are more preferable. In addition, the phosphoric acid-based compound A is preferably used as an aqueous solution because the uniformity of the reaction is improved and the efficiency of introducing the phosphoric acid group is increased. The pH of the aqueous solution of the phosphoric acid-based compound A is preferably 7 or less because the efficiency of introducing the phosphoric acid group is high. The pH, however, is preferably 3-7 from the viewpoint of preventing hydrolysis of the cellulose raw material such as pulp.

As one example of the phosphoric acid esterification method, the following methods can be exemplified. The phosphoric acid-based compound A is added to a dispersion liquid of the cellulose raw material (for example, a solid content concentration of 0.1-10% (v/w)) with stirring to introduce phosphoric acid groups into the cellulose. The amount of the added phosphoric acid-based compound A relative to 100 parts by mass of the cellulose raw material is preferably 0.2 part by mass or more and more preferably 1 part by mass or more in terms of the amount of phosphorus element. This allows the yield of the microscopic fibrous cellulose to be further improved. The upper limit is usually 500 parts by mass or less and preferably 400 parts by mass or less. This allows the effect of improving the yield to be prevented from reaching a plateau, which is preferable from the viewpoint of cost. Therefore, the amount is preferably 0.2-500 parts by mass and more preferably 1-400 parts by mass.

At the time of introducing phosphoric acid groups into the cellulose, a powder or an aqueous solution of a compound B may be mixed in addition to the cellulose raw material and the phosphoric acid-based compound A. The compound B is not particularly limited as long as the compound B is a compound other than the cellulose raw material and the phosphoric acid-based compound A and is preferably a nitrogen-containing compound exhibiting basicity. The term "basicity" referred herein is defined as the aqueous solution exhibiting a pink to red color in the presence of a phenolphthalein indicator or the pH of the aqueous solution being more than 7. The nitrogen-containing compound exhibiting basicity is not particularly limited and is preferably a compound having an amino group. Examples of the nitrogen-containing compound include urea, methylamine, ethylamine, trimethylamine, triethylamine, monoethanolamine, diethanolamine, triethanolamine, pyridine, ethylenediamine, and hexamethylenediamine. Of these compounds, urea, which is low in cost and easy to handle, is preferable. The amount of the added compound B is preferably 2-1,000 parts by mass and more preferably 100-700 parts by mass relative to 100 parts by mass of the solid content of the cellulose raw material. The reaction temperature is preferably 0-95°C and more preferably 30-90°C. The reaction time is not particularly limited and is usually about 1-600 minutes and preferably 30-480 minutes. The conditions of the esterification reaction within these ranges allow the cellulose to be prevented from being excessively esterified and thus to be easily dissolved. Consequently, the yield of the phosphate esterified cellulose may be excellent. After water is removed from the obtained phosphoric acid-esterified cellulose suspension liquid, heat treatment (for example, 100-170°C) is preferably applied from the viewpoint of reducing hydrolysis of the cellulose. In addition, while water is included at the heat treatment, preheating (usually 130°C or lower, preferably 110°C or lower) is preferably applied to remove water and thereafter the heat treatment (for example, 100-170°C) is applied.

The degree of phosphoric acid group substitution per glucose unit of the phosphoric acid-esterified cellulose is preferably 0.001-0.40. Introduction of the phosphate group substituent into the cellulose causes the celluloses to be electrically repelled from each other. Therefore, the cellulose to which the phosphate groups are introduced can be easily defibrated. A degree of phosphate group substitution per glucose unit of 0.001 or more allows the defibration to be sufficiently performed. On the other hand, a degree of phosphate group substitution per glucose unit of 0.40 or less may allow swelling or dissolution to be reduced and thus a product may fail to be obtained as the nanofiber. In order to efficiently perform the defibration, the phosphoric acid-esterified cellulose raw material obtained above is preferably boiled and thereafter washed with cold water.

(Cationization)

The cationized cellulose can be obtained by cationizing the oxidized cellulose. As a method for cationizing the oxidized cellulose, for example, a method in which a cationizing agent such as glycidyltrimethylammonium chloride, a 3-chloro-2-hydroxypropyltrialkylammonium halide, and a halohydrin-type thereof and a catalyst such as an alkali metal hydroxide (for example, sodium hydroxide and potassium hydroxide) are reacted with the oxidized cellulose in the presence of water or an alcohol (for example, an alcohol having a carbon number of 1-4) is exemplified.

A degree of the cation substitution per glucose unit is preferably 0.02-0.50. Introduction of the cation substituent into the cellulose allows the celluloses to be electrically repelled from each other. Therefore, the cellulose to which the cation substituent is introduced can be easily defibrated. A degree of cation substitution per glucose unit of 0.02 or more allows the defibration to be sufficiently performed. On the other hand, a degree of cation substitution per glucose unit of 0.50 or less may cause swelling or dissolution and thus a product may fail to be obtained as the nanofiber. In order to efficiently perform the defibration, the cation-modified cellulose raw material obtained above is preferably washed. The degree of the cation substitution can be adjusted by the amount of the added cationizing agent to be reacted and the composition ratio of water or alcohol having a carbon number of 1-4.

(Hydrolysis treatment)

The modified cellulose is usually obtained as a dispersion liquid (for example, an aqueous dispersion) and the dispersion liquid preferably has excellent fluidity. A dispersion liquid having excellent fluidity is suitable for reducing an increase in viscosity of the latex immersion liquid. Examples of the method for improving the fluidity include a method of hydrolyzing the modified cellulose in an alkaline solution having a pH of 8-14. In this method, water is preferably used as a reaction medium in order to reduce side reactions. In addition, an oxidizing agent or a reducing agent as an auxiliary agent is preferably used. As the oxidizing agent or the reducing agent, the agent having activity in an alkaline region of a pH of 8-14 can be used. Examples of the oxidizing agent include oxygen, ozone, hydrogen peroxide, hypochlorite salts, and combinations of two or more of them. Of these oxidizing agents, the oxidizing agents that is difficult to generate radicals (for example, oxygen, hydrogen peroxide, and the hypochlorite salts) are preferable and hydrogen peroxide is more preferable from the viewpoint of preventing coloring. The oxidizing agent that generates radicals such as ozone is preferably used in small amounts from the viewpoint of coloring reduction and more preferably not substantially used. As the oxidizing agent, use of hydrogen peroxide alone is more preferable. Examples of the reducing agent include sodium borohydride, hydrosulfite, sulfite salts, and a combination of two or more of them. From the viewpoint of reaction efficiency, the amount of the added auxiliary agent is preferably 0.1-10% (w/v), more preferably 0.3-5% (w/v), and further preferably 0.5-2% (w/v) relative to the absolutely dried cellulose raw material.

The pH of the reaction solution in the hydrolysis reaction is preferably 8-14, more preferably 9-13, and further preferably 10-12. The reaction liquid having a pH of 8 or more allows a situation in which sufficient hydrolysis does not occur to be avoided and a modified cellulose nanofiber dispersion liquid having excellent fluidity to be obtained. In addition, the reaction liquid having a pH of 14 or less allows the hydrolysis to proceed and the coloring of the oxidized cellulose after the hydrolysis to be reduced. The alkali used for adjusting the pH should be water-soluble. From the viewpoint of production cost, sodium hydroxide is optimal. In addition, from the viewpoint of reaction efficiency, the temperature is preferably 40-120°C, more preferably 50-100°C, and further preferably 60-90°C. The reaction performed at a temperature of 40°C or more allows a situation in which sufficient hydrolysis is unlikely to occur to be avoided and the modified cellulose nanofiber dispersion liquid having excellent fluidity to be obtained. On the other hand, the reaction performed at a temperature of 120°C or less allows hydrolysis to proceed and coloring of the oxidized cellulose after hydrolysis to be reduced. The reaction time for the hydrolysis is preferably 0.5-24 hours, more preferably 1-10 hours, and further preferably 2-6 hours. From the viewpoint of reaction efficiency, the concentration of the oxidized cellulose raw material in the reaction liquid (usually a dispersion liquid) is preferably 1-20% by mass, more preferably 3-15% by mass, and further preferably 5-10% by mass.

Hydrolysis of the modified cellulose in the alkaline solution having a pH of 8-14 allows the energy required for defibration in the subsequent step to be reduced. In the case where the modified cellulose is the oxidized cellulose, the reason for this is presumed, for example, as follows. The carboxy groups are scattered in the amorphous region of the oxidized cellulose obtained by the oxidation using the N-oxyl compound. The hydrogen at the C6 position where the carboxy group exists is in a state where electric charge is deficient because electrons are withdrawn by the carboxy group. Therefore, the hydrogen is easily withdrawn by a hydroxide ion under the alkaline conditions of a pH of 8-14. This allows the cleavage reaction of the glucoside bond by $\beta$-elimination to proceed and the short fiber of the oxidized cellulose raw material to be formed. Shortening the fiber length of the oxidized cellulose as described above allows the viscosity of the dispersion liquid including the raw material to be reduced. As a result, the energy required for defibration is reduced. Mere hydrolysis of the oxidized cellulose under the alkaline conditions, however, may cause the cellulose raw material to turn yellow. This is conceivable that double bonds are formed at the time of the $\beta$-elimination. Therefore, in the hydrolysis under alkaline conditions of a pH of 8-14, use of the oxidizing agent or the reducing agent allows this double bond to be eliminated by oxidation or reduction and thus the coloring can be reduced. Use of hydrogen peroxide as the oxidizing agent allows radicals to be difficult to generate and thus coloring is less likely to occur.

Examples of other methods for improving the fluidity of the dispersion liquid include a method for irradiating the modified cellulose with ultraviolet rays, a method for oxidatively decomposing the modified cellulose with hydrogen peroxide and ozone, a method for hydrolyzing the modified cellulose with an acid, and a combination of two or more of these methods. These other methods may be combined with the method for hydrolyzing the modified cellulose in the above-described alkaline solution.

(Fibrillation treatment)

At the fibrillation treatment of the modified cellulose, defibration is usually performed. Apparatuses for the defibration are not particularly limited. Examples of the apparatuses include a high-speed rotary-type apparatus, a colloid mill-type apparatus, a high-pressure-type apparatus, a roll mill-type apparatus, and an ultrasonic-type apparatus. At the time of the defibration, shear force is preferably applied to the dispersion liquid of the modified cellulose. More preferable, a pressure of 50 MPa or more is applied to the modified cellulose (usually the dispersion liquid) and strong shear force is applied. The pressure and/or the shear force is preferably applied by the apparatus. The apparatus is more preferably a wet-type high pressure or ultrahigh pressure homogenizer. The pressure applied to the modified cellulose (usually a dispersion liquid) is more preferably 100 MPa or more and further preferably 140 MPa or more. In addition, prior to the defibration and dispersion treatment with the high-pressure homogenizer, the dispersion liquid of the modified cellulose can be subjected to pretreatment, if necessary, using a known mixing, stirring, emulsifying, and dispersing apparatus such as a high-speed shear mixer. The number of treatments (pass times) in the defibrator may be once or may be twice or more, and preferably twice or more.

The modified cellulose or the nanofiber may be subjected to dispersion treatment before, after, or at the same time as the defibration treatment. In the dispersion treatment, the modified cellulose is usually dispersed in a solvent or the solid content concentration of the dispersion liquid of the modified cellulose or the nanofiber is adjusted with the solvent. The solvent is not particularly limited as long as the solvent can disperse the modified cellulose. Examples of the solvent include water, an organic solvent (for example, a hydrophilic organic solvent such as methanol), and a mixed solvent thereof. The cellulose raw material is hydrophilic and thus the solvent is preferably water.

The solid content concentration of the modified cellulose or nanofiber in the dispersion liquid is usually 0.1% (v/w) or more, preferably 0.2% (v/w) or more, and more preferably 0.3% (v/w). This allows the amount of liquid to become appropriate relative to the amount of the cellulose fiber raw material, which is efficient. The upper limit is usually 10% (v/w) or less and preferably 6% (v/w) or less. This allows fluidity to be retained.

Pretreatment may be performed, if necessary, prior to the defibration treatment or dispersion treatment. The pretreatment may be performed by using a mixing, stirring, emulsifying, and dispersing apparatus such as the high-speed shear mixer.

(Desalting treatment)

The modified cellulose nanofiber may contain more of the acid-type functional groups than the salt-type functional groups or may contain more of the salt-type functional groups than the acid-type functional groups. The modified cellulose nanofiber may further undergo desalting treatment in addition to the modification treatment and the fibrillationtreatment. This allows the salt-type functional group contained in the modified cellulose nanofiber to be converted into the acid-type functional group. In the present specification, in the case where the "acid type" is assigned to the cellulose nanofiber or the cellulose, this represents that the cellulose nanofiber or the cellulose has undergone desalting, whereas in the case where the "salt type" is assigned to the cellulose nanofiber or the cellulose, this represents that the cellulose nanofiber or the cellulose has not undergone desalting. Examples of the desalting treatment include an acid treatment using a mineral acid and a method using a cation exchange resin. The timing of the desalting treatment may be after the modification and may be either before or after the fibrillation.

(Other optional treatment)

The modified cellulose nanofiber may undergo any treatment other than the above-described treatment.

For example, the modified cellulose nanofiber may be imparted with hydrophobicity by a method using a cationic additive.

A modifier may be added to the modified cellulose nanofiber. Examples of the modifier include a nitrogen-containing compound, a phosphorus-containing compound, and an onium ion as the modifier for the anion-modified cellulose nanofiber. Bonding the modifier to the anionic group on the surface of the cellulose nanofiber allows properties such as polarity to be changed, whereby affinity for solvents and dispersibility of fillers can be adjusted.

In the case where the acid-type functional group exists in the anion-modified cellulose nanofiber, a basic compound such as sodium hydroxide or ammonium may be appropriately added to form the salt-type functional group. This allows deterioration in dispersibility due to the existence of the acid-type functional group to be reduced.

The content (the amount of the solid content of the modified cellulose nanofiber) of the component (2) in the latex immersion liquid is usually 0.01-20 parts by mass, preferably 0.05-10 parts by mass, and more preferably 0.1-5 parts by mass relative to 100 parts by mass of the component (1) (the dried rubber content).

The modified cellulose nanofiber serving as the component (2) is usually a dispersion liquid. The dispersion liquid may further include an optional component. Examples of the optional component include a dispersing agent and a filler. Examples of the dispersing agent include a water-soluble polymer. Examples of the water-soluble polymer include cellulose derivatives (for example, carboxymethyl cellulose, methyl cellulose, hydroxypropyl cellulose, and ethyl cellulose), xanthan gum, xyloglucane, dextrin, dextran, carrageenan, locust bean gum, alginic acid, alginate salts, purulan, starch, Katakuri powder, arrowroot powder, positive starch, phosphorylated starch, corn starch, Arabic gum, gellan gum, gellan gum, polydextrose, pectin, chitin, water-soluble chitin, chitosan, casein, albumin, soybean protein dissolved products, peptone, polyvinyl alcohol, polyacrylamide, sodium polyacrylate, polyvinylpyrrolidone, poly(vinyl acetate), poly(amino acid), poly(lactic acid), poly(malic acid), polyglycerin, latexes, rosin-based sizing agents, petroleum resin-based sizing agents, urea resins, melamine resins, epoxy resins, polyamide resins, polyamide-polyamine resins, polyethyleneimine, polyamines, vegetable gums, polyethylene oxide, hydrophilic crosslinked polymers, polyacrylate salts, starch-poly(acrylic acid) copolymers, tamarind gum, guar gum, and colloidal silica and combinations thereof. Of these water-soluble polymers, carboxymethyl cellulose or the salt thereof is preferably used from the viewpoint of solubility. Examples of the filler include carbon black, silica, talc, clay, calcium carbonate, and other fillers commonly used in the rubber industry.

The component (2) may be one kind of the modified cellulose nanofiber or a combination of two or more kinds of the modified cellulose nanofibers.

<Component (1): Rubber latex>

In the present specification, the rubber latex refers to a raw material for a rubber that is crosslinked to form the rubber. A rubber component for a natural rubber and a rubber component for a synthetic rubber exist. In the present invention, either of the rubber components may be used or both of the rubber components may be combined. In the present specification, for convenience, the rubber component for rubber may be referred to as a rubber polymer. In addition, the rubber components for the natural rubber and the synthetic rubber may be referred to as a "natural rubber polymer" and a "synthetic rubber polymer", respectively.

Examples of the natural rubber (NR) polymer include a natural rubber polymer in a narrow sense without chemical modification (for example, HA latex and LA latex); a chemically modified natural rubber polymer such as a chlorinated natural rubber polymer, a chlorosulfonated natural rubber polymer, and an epoxidized natural rubber polymer; a hydrogenated natural rubber polymer; and a deproteinized natural rubber polymer. Examples of the synthetic rubber polymer include diene-based rubber polymers such as a butadiene rubber (BR) polymer, a styrene-butadiene copolymer rubber (SBR) polymer, an isoprene rubber (IR) polymer, an acrylonitrile-butadiene rubber (NBR) polymer, a chloroprene rubber (CR) polymer, an styrene-isoprene copolymer rubber polymer, a styrene-isoprene-butadiene copolymer rubber polymer, and an isoprene-butadiene copolymer rubber polymer; and non-diene rubber polymers such as a butyl rubber (IIR) polymer, an ethylene-propylene rubber (EPM, EPDM) polymer , an acrylic rubber (ACM) polymer, an epichlorohydrin rubber (CO, ECO) polymer, a fluororubber (FKM) polymer, a silicone rubber (Q) polymer, a urethane rubber (U) polymer, and a chlorosulfonated polyethylene (CSM) polymer. One type of the rubber polymer alone may be used or a plurality of types of the rubber polymers may be used in combination. Of these rubber polymers, the diene-based rubber polymers including the natural rubber (NR) polymer are preferable from the viewpoint of a reinforcing property. Examples of the preferable diene-based rubber polymers include the natural rubber (NR) polymer, the isoprene rubber (IR) polymer, the butadiene rubber (BR) polymer, the styrene-butadiene copolymer rubber (SBR) polymer, the butyl rubber (IIR) polymer, the acrylonitrile-butadiene rubber (NBR) polymer, and the above modified natural rubber polymer.

The rubber component may be a solution dissolved in an organic solvent and may be subjected to mixing, in addition to the dispersion liquid (the latex) dispersed in a dispersion medium such as water. The amount of the liquid medium is preferably 10-5,000 parts by mass relative to 100 parts by mass of the rubber component.

The component (1) may be one kind of rubber latex or a combination of two or more kinds of the rubber latexes.

<Component (3): Defoaming agent>

The defoaming agent included in the immersion liquid according to the present invention is used for producing a rubber composition having no hole defects or the like caused by foams with respect to the rubber composition produced through the latex immersion step. The type of the used defoaming agent is not particularly limited. Examples of the defoaming agent include polyethers, sorbitan fatty acid esters, glycerin fatty acid esters, polyoxyalkylene alkyl ethers, polyoxyalkylene alkyl ether derivatives, polyoxyethylene glycol fatty acid esters, glycerin alkylene oxide adducts, fatty acid monoesters and diesters of polyoxyalkylene glycols, alkylaryl sulfonate salts, alkylbiphenyl ether disulfonate salts, dodecylbenzene sulfonate salts, dodecylbiphenyl ether disulfonate salts, calcium dodecylbenzenesulfonate, and calcium dodecylbiphenyl ether disulfonate. The polyethers are preferable. However, the defoaming agent is not limited to these compounds. The number of carbon atoms in the defoaming agent is not particularly limited and a functional group may be added. In addition, the defoaming agent may include a mineral oil or silica, preferably includes at least one kind of the polyether, silica, and the mineral oil, and preferably includes the polyether, silica, and the mineral oil. Examples of the mineral oil include a paraffin-based mineral oil and a naphthen-based mineral oil, which may be a natural mineral oil or may be a refined mineral oil undergoing refining treatment (for example, vacuum distillation, oil deasphalting, solvent extraction, hydrocracking, solvent dewaxing, sulfuric acid washing, white clay refining, hydrorefining, or a combination of two or more selected from these processes). The mineral oil may be one kind of the oil or a combination of two or more kinds of the oils. Examples of silica include fine powder silica (for example, aerosol silica, precipitated silica, and calcined silica), which may be surface-untreated or hydrophobized. These types of silica may be used singly or in combination of two or more of the types of silica.

The content of the component (3) in the latex immersion liquid is usually 0.05 part by mass or more and preferably 0.1 part by mass or more relative to 100 parts by mass of the component (1) (dried rubber content). The upper limit is usually 1.0 part by mass or less and preferably 0.5 part by mass or less. Therefore, the content is usually 0.05-1.0 part by mass and preferably 0.1-0.5 part by mass.

The component (3) may be one kind of the defoaming agent or a combination of two or more kinds of the defoaming agents.

<Optional components>

The latex immersion liquid according to the present invention may include optional components other than the components (1) to (3), if necessary. Examples of the optional components include zinc oxide, stearic acid, compounding agents for cross-link (for example, cross-linking agents (for example, sulfur, halogenated sulfurs, organic peroxides, quinonedioximes, organic polyhydric amine compounds, and alkylphenol resins having methylol groups), vulcanization accelerators (for example, N-oxydiethylene-2-benzothiazolyl sulfeneamide and N-t-butyl-2-benzothiazolesulfenamide), vulcanization accelerator aids, and scorch inhibitors), pH adjusters, antioxidants, reinforcing agents (or fillers such as carbon black, silica, and calcium carbonate), silane coupling agents, oils, hardened resins, waxes, rubber antioxidants, colorants, softeners/plasticizers, hardeners (for example, phenolic resins and high styrene resins), foaming agents, adhesives (for example, macron resins, phenol resins, terpene resins, petroleum hydrocarbon resins, and rosin derivatives), dispersing agents (for example, fatty acids), adhesion enhancers (for example, organic cobalt salts), lubricants (for example, paraffins, hydrocarbon resins, fatty acids, and fatty acid derivatives), and other compounding agents that can be used in the rubber industry. Of these compounds, zinc oxide, sulfur, the vulcanization accelerators, the pH adjusters (for example, potassium hydroxide), and the antioxidants are preferable. The content of the cross-linking agent is preferably 0.5 part by mass or more and more preferably 1.0 parts by mass or more relative to 100 parts by mass of the rubber component. The upper limit is preferably 10 parts by mass or less, more preferably 7 parts by mass or less, and further preferably 5 parts by mass or less. The content of the vulcanization accelerator is preferably 0.1 part by mass or more, more preferably 0.3 part by mass or more, and further preferably 0.4 part by mass or more relative to 100 parts by mass of the rubber component. The upper limit is preferably 5 parts by mass or less, more preferably 3 parts by mass or less, and further preferably 2 parts by mass or less.

<Method for producing latex immersion liquid>

The method for producing the latex immersion liquid is not particularly limited and an example is as follows.
First, the components (1) and (2) are mixed to give a mixed liquid. At the time of the mixing, the component (2) is preferably a modified cellulose nanofiber dispersion liquid (preferably an aqueous dispersion liquid). Mixing is performed with stirring, if necessary, and an apparatus such as a homomixer, a homogenizer, or a propeller stirrer may be used. The mixing is preferably performed at room temperature (for example, 20-30°C) and conditions other than the temperature (rotation speed and time) may be appropriately adjusted.
Subsequently, the resultant mixture is aged to give an immersion liquid. Aging is usually performed for about one day (for example, 20-30 hours). In the case where the optional component is used, the optional component is added to the mixed liquid before the aging. In the present specification, in the case where the optional component includes the compounding agent for cross-link, the immersion liquid may be referred to as a pre-vulcanized latex. Addition of the compounding agent for cross-link to perform the pre-vulcanization allows effects such as crack prevention and gloss improvement of rubber products to be expected. The optional component (for example, the compounding agent for cross-link) is prepared as a reagent slurry by previously mixing before the optional component is added to the mixed liquid.
Subsequently, the component (3) is added to the immersion liquid (pre-vulcanized latex) to give a latex immersion liquid. The method for adding the component (3) is not particularly specified. A method for spraying the component (3) to the immersion liquid is preferable and the component (3) is preferably continuously blown until air bubbles in the immersion liquid are removed.

<Viscosity of latex immersion liquid>

The latex immersion liquid preferably has a low viscosity. For example, the B-type viscosity (25°C and 60 rpm) of the latex immersion liquid after a lapse of 24 hours from the production is usually 500 mPa·s or less, preferably 450 mPa·s or less, more preferably 400 mPa·s or less, further preferably 350 mPa·s, and further more preferably 300 mPa·s or less. The lower limit is preferably 10 mPa·s or more, more preferably 20 mPa·s or more, further preferably 50 mPa·s or more, 70 mPa·s or more, or 100 mPa·s or more. The B-type viscosity of the latex immersion liquid after a lapse of 24 hours can be measured, for example, at a rotation speed of 60 rpm by allowing the latex immersion liquid to stand under a condition of 25°C.

[2. Rubber composition]

In the present invention, the rubber composition includes the above-described latex immersion liquid as a raw material. Examples of the method for producing the rubber composition include a method including immersing the mold in a coagulant to give a surface-treated mold, immersing the surface-treated mold in the above-described latex immersion liquid, forming a film, and thereafter peeling the film from the mold. This allows an entire rubber composition integrally formed of a rubber film to be produced. This method will be described below by exemplifying one example.

First, a mold having a desired shape is prepared. Examples of the material of the mold include ceramics (pottery). The material, however, is not particularly limited. Subsequently, the surface of the mold is treated with a coagulant (for example, an aqueous solution of calcium chloride) to give a surface-treated mold. The treatment may usually be performed by immersing the mold in the coagulant (usually 5-60 seconds) and thereafter drying (for example, 80-150°C). The drying time is usually 10-20 seconds and is not particularly limited. Subsequently, the surface-treated mold is immersed in the latex immersion liquid. The immersion may be performed for 5-60 seconds and is not particularly limited. After the immersion, the mold is pulled up to attach the latex immersion liquid to the surface of the mold. A film is formed and thereafter peeled from the mold to give the rubber composition. The film is usually formed by drying (for example, 80-150°C). The drying time is usually 10-20 seconds and is not particularly limited. Preparing a rubber glove mold as a mold having a desired shape allows rubber gloves to be produced. Examples of integrally molded products other than the rubber gloves include medical devices (for example, catheters) and contraceptives.

[Examples]

Hereinafter, the present invention will be described in further detail with reference to Production Examples and Examples. The present invention, however, is not limited thereto.

<Production of cellulose nanofiber dispersion liquid>

[Production Example 1]

5 g (absolutely dried) of softwood kraft dissolving pulp (Buckeye Technologies Inc.) was added to 500 ml of an aqueous solution in which 7.8 mg (0.05 mmol) of TEMPO (Sigma-Aldrich Co. LLC) and 755 mg (7 mmol for 1 g of absolutely dried cellulose) of sodium bromide were dissolved and the resultant reaction liquid was stirred until the pulp was uniformly dispersed. After 11.3 ml of a sodium hypochlorite aqueous solution (concentration 2.1 mol/L) was added to the reaction liquid, the pH was adjusted to 10.3 with a 0.5 N hydrochloric acid aqueous solution to start oxidation reaction. Although the pH of the reaction liquid lowered during the reaction, a 0.5 N sodium hydroxide aqueous solution was sequentially added to adjust the pH to 10. After the reaction was performed for 170 minutes, the reaction liquid was filtered using a glass filter and the filtered residue was washed sufficiently with water to give an oxidized cellulose.

Measurement of the amount of carboxy groups of the obtained oxidized cellulose was performed as follows resulted in an amount of 1.6 mmol/g.

(Method for measuring amount of carboxy groups)

60 ml of a 0.5% by mass slurry (aqueous dispersion liquid) of the oxidized cellulose was prepared and a 0.1 M hydrochloric acid aqueous solution was added to adjust the pH to 2.5. Thereafter, a 0.05 N sodium hydroxide aqueous solution was added dropwise and electrical conductivity was measured until the pH reached to 11. The amount of the carboxy group was calculated from the amount of sodium hydroxide (a) consumed in the neutralization stage of the weak acid in which the change in the electric conductivity was gradual in accordance with the following formula:

```
Amount of carboxy groups [mmol/g oxidized cellulose] = a
[ml] × 0.05/Mass of oxidized cellulose [g].
```

A 5% (w/v) aqueous dispersion of oxidized cellulose was prepared. To the dispersion liquid, 1% (w/v) of hydrogen peroxide to the oxidized cellulose (absolutely dried) was added to the oxidized cellulose (absolutely dried) and 1M sodium hydroxide was added to adjust the pH to 12. This aqueous dispersion liquid was heated at 80°C for 2 hours to hydrolyze the oxidized cellulose. Thereafter, the resultant reaction liquid was filtered using a glass filter and the filtered residue was sufficiently washed with water.

The oxidized cellulose obtained in the above process was adjusted to 1.0% (w/v) with water and treated three times with an ultrahigh pressure homogenizer (20°C, 150 MPa) to give an oxidized cellulose nanofiber (TEMPO-oxidized cellulose nanofiber) dispersion liquid.

Measurements of the average fiber diameter and the average fiber length of the obtained oxidized cellulose nanofiber were performed as follows resulted in an average fiber diameter of 5.7 nm and an average fiber length of 311 nm.

(Method for measuring average fiber length)

The average fiber diameter and the average fiber length of oxidized cellulose nanofiber were measured using an atomic force electron microscope (AFM). The average fiber diameter was analyzed for randomly selected 50 fibers and the average fiber length was analyzed for randomly selected 200 fibers.

[Production Example 2]

5 g (absolutely dried) of softwood kraft dissolving pulp (Buckeye Technologies Inc.) was added to 500 ml of an aqueous solution in which 7.8 mg (0.05 mmol) of TEMPO (Sigma-Aldrich Co. LLC) and 755 mg (7 mmol) of sodium bromide were dissolved and the resultant reaction liquid was stirred until the pulp was uniformly dispersed. After 6.4 ml of a sodium hypochlorite aqueous solution (concentration 2.1 mol/L) was added to the reaction liquid, the pH was adjusted to 10.3 with a 0.5 N aqueous hydrochloric acid solution to start oxidation reaction. Although the pH of the reaction liquid lowered during the reaction, a 0.5 N sodium hydroxide aqueous solution was sequentially added to adjust the pH to 10. After the reaction was performed for 80 minutes, the reaction liquid was filtered using a glass filter and the filtered residue was washed sufficiently with water to give an oxidized cellulose.
Measurement of the amount of carboxy group of the obtained oxidized cellulose resulted in an amount of 1.0 mmol/g.
A 5% (w/v) aqueous dispersion of oxidized cellulose was prepared. To the dispersion liquid, 1% (w/v) of hydrogen peroxide to the oxidized cellulose was added and 1M sodium hydroxide was added to adjust the pH to 12. This aqueous dispersion liquid was heated at 80°C for 2 hours to hydrolyze the oxidized cellulose. Thereafter, the resultant reaction liquid was filtered using a glass filter and the filtered residue was sufficiently washed with water.
The oxidized cellulose obtained in the above process was adjusted to 1.0% (w/v) with water and treated three times with an ultrahigh pressure homogenizer (20°C, 150 MPa) to give an oxidized cellulose nanofiber (TEMPO-oxidized cellulose nanofiber) dispersion liquid. The average fiber diameter and the average fiber length of the obtained oxidized cellulose nanofiber were 5.4 nm and 307 nm, respectively.

[Production Example 3]

5.00 g (absolutely dried) of bleached unbeaten kraft pulp derived from softwood (a degree of whiteness 85%) was added to 500 ml of an aqueous solution in which 39 mg (0.25 mmol) of TEMPO (Sigma-Aldrich Co. LLC) and 514 mg (5.0 mmol) of sodium bromide were dissolved and the resultant reaction liquid was stirred until the pulp was uniformly dispersed. A sodium hypochlorite aqueous solution was added to the reaction system so that the concentration was 6.0 mmol/g to start oxidation reaction. Although the pH of the system lowered during the reaction, a 0.5 M sodium hydroxide aqueous solution was sequentially added to adjust the pH to 10. After the reaction liquid was reacted for 90 minutes, the reaction liquid was filtered using a glass filter and the filtered residue was washed sufficiently with water to give an oxidized cellulose raw material.
Measurement of the amount of carboxy group of the obtained oxidized cellulose resulted in an amount of 1.6 mmol/g.
The oxidized pulp obtained in the above process was adjusted to 1.0% (w/v) with water and treated three times with an ultrahigh pressure homogenizer (20°C, 150 MPa) to give an oxidized cellulose nanofiber (TEMPO-oxidized cellulose nanofiber) dispersion liquid. The average fiber diameter and the average fiber length of the obtained oxidized cellulose nanofiber were 2.7 nm and 600 nm, respectively.

<Production of rubber composition and evaluation of physical properties>

[Example 1]

As the cellulose nanofiber, the TEMPO-oxidized cellulose nanofiber (carboxy group amount: 1.6 mmol/g, average fiber length 311 nm) obtained in Production Example 1 was used. Relative to 100 parts by mass of the dried rubber component in a natural rubber latex (trade name: HA Latex, Reditex Co., Ltd., solid content concentration 28%), 2 parts by mass in terms of solid of the cellulose nanofiber aqueous dispersion liquid was blended. The resultant mixture was stirred at a rotation speed of 3,000 rpm for 15 minutes using High Flex Homogenizer (SMT Co., Ltd.) to give a mixed liquid of the latex and the cellulose nanofiber. A reagent slurry prepared by mixing respective reagents of 1 part of sulfur, 1 part of zinc oxide, 0.5 part of a vulcanization accelerator (Noxeller MSA-G manufactured by OUCHI SHINKO CHEMICAL INDUSTRIAL CO., LTD), 0.5 part of an antioxidant (K-840, manufactured by CHUKYO YUSHI CO., LTD.), and 0.5 part of potassium hydroxide was added to the mixed liquid relative to 100 parts by mass of the dried rubber, and thereafter the resultant mixture was stirred with High Flex Homogenizer and aged for 1 day to give a pre-vulcanized latex. In order to eliminate foams generated during stirring, a defoaming agent (Deformer 777, manufactured by SAN NOPCO LIMITED) was added by spraying to the obtained pre-vulcanized latex in 0.1-0.5% by weight relative to 100% by mass of the dried rubber component of the latex. The resultant mixture was stirred using Three-One Motor at a rotation speed of 120 rpm. Thereafter, existence of no foams was visually confirmed to give a latex immersion liquid. Subsequently, a ceramic plate was immersed in a 30% calcium chloride aqueous solution for 10 seconds and thereafter dried at 120°C for 15 minutes to give a ceramic plate of which surface was treated with a coagulant. The obtained ceramic plate was immersed in the latex immersion liquid for 10 seconds, and thereafter pulled up from the immersion liquid and dried at 120°C for 30 minutes to form a film. The film-formed sample was peeled off from the ceramic plate to give a rubber composition.

<Viscosity measurement>

The B-type viscosity (mPa·s) of the pre-vulcanized latex was measured. The viscosity of the pre-vulcanized latex after a lapse of 24 hours from the production under the condition of 25°C was measured using a B-type viscometer (DV-I Prime manufactured by AMETEK Brookfield, Inc.) at a rotation speed of 60 rpm using a spindle S63. The measurement results are listed in Table 1.

<Physical property evaluation>

The obtained rubber composition was punched into a dumbbell shape to prepare a dumbbell-shaped No. 3 test specimen described in JIS K 6251 "Rubber, vulcanized or thermoplastic - Determination of tensile stress-strain properties". Subsequently, these test specimens were used to measure tensile stress M100 (MPa) at 100% elongation, tensile stress M300 (MPa) at 300% elongation, tensile strength at break (MPa), and elongation at break (%) in accordance with JIS K 6251. The measurement results are listed in Table 2.

[Example 2]

Example 2 was performed by the same method as the method in Example 1 except that the TEMPO-oxidized cellulose nanofiber obtained in Production Example 1 was changed to the TEMPO-oxidized cellulose nanofiber in Production Example 2 (carboxy group amount: 1.0 mmol/g, average fiber length 307 nm).

[Comparative Example 1]

Comparative Example 1 was performed by the same method as the method in Example 1 except that the TEMPO-oxidized cellulose nanofiber obtained in Production Example 1 was not used.

[Comparative Example 2]

Comparative Example 3 was performed by the same method as the method in Example 1 except that the TEMPO-oxidized cellulose nanofiber obtained in Production Example 1 was changed to the TEMPO-oxidized cellulose nanofiber in Production Example 3 (carboxy group amount: 1.6 mmol/g, average fiber length 600 nm).

[Table 1]

Table 1

|  | Example | | Comparative Example | |
| --- | --- | --- | --- | --- |
|  | I | 2 | 1 | 2 |
| B-type viscosity (mPa·s) | 160 | 170 | 160 | 1100 |

[Table 2]

Table 2

| | | Example | | Comparative Example | |
|---|---|---|---|---|---|
| | | 1 | 2 | 1 | 2 |
| Evaluation | M100 (MPa) | 0.69 | 058 | 0.27 | Impossible to measure |
| | M300 (MPa) | 1.86 | 1.34 | 0.54 | |
| | Tensile strength at break (MPa) | 5.93 | 3,42 | 0.70 | |
| | Elongation at break (%) | 597 | 483 | 345 | |

<Results>

From the results in Table 1, the systems using the short-fiber cellulose nanofibers described in Example 1 and Example 2 have low viscosities of the latex immersion liquids as compared with the system using the general cellulose nanofiber described in Comparative Example 2. From the results in Table 2, the rubber composition using the short fiber cellulose nanofiber described in Example 1 or Example 2 indicates high tensile strength at break and elongation at break as compared with those of the rubber composition using NR latex alone described in Comparative Example 1. The rubber composition using the general cellulose nanofiber described in Comparative Example 2 was not able to form the film of the rubber composition due to excessively high viscosity of the latex immersion liquid.

**Claims**

1. A latex immersion liquid comprising the following (1) to (3) :

    (1) a rubber latex;
    (2) a modified cellulose nanofiber having an average fiber length of 200 nm-400 nm; and
    (3) a defoaming agent.

2. The latex immersion liquid according to claim 1, wherein the (2) includes an oxidized cellulose nanofiber.

3. The latex immersion liquid according to claim 2, wherein the oxidized cellulose nanofiber is a TEMPO-oxidized cellulose nanofiber.

4. The latex immersion liquid according to claim 3, wherein an amount of carboxy groups of the TEMPO-oxidized cellulose nanofiber is 0.2 mmol/g-2.0 mmol/g.

5. The latex immersion liquid according to any one of claims 1 to 4, wherein the (3) includes at least one compound selected from the group consisting of polyether, silica, and a mineral oil.

6. The latex immersion liquid according to any one of claims 1 to 5, wherein a B type viscosity after a lapse of 24 hours from production is 10-500 mPa·s.

7. A method for producing a latex immersion liquid, the method comprising:

    mixing (1) and (2) to give a mixed liquid;
    aging the mixed liquid; and
    spraying a component (3) to the mixed liquid after aging.

8. A rubber composition comprising the latex immersion liquid according to any one of claims 1 to 6 as a raw material.

9. A method for producing a rubber composition using the latex immersion liquid according to any one of claims 1 to 6 as a raw material.

## INTERNATIONAL SEARCH REPORT

International application No.

PCT/JP2020/017105

### A. CLASSIFICATION OF SUBJECT MATTER

C08L 21/00(2006.01)i; A41D 19/00(2006.01)i; A41D 19/04(2006.01)i; C08K 3/36(2006.01)i; C08L 1/02(2006.01)i; C08L 71/02(2006.01)i; C08L 91/00(2006.01)i
FI:      C08L21/00; C08L1/02; C08L71/02; C08K3/36; C08L91/00; A41D19/04 B; A41D19/00 P

According to International Patent Classification (IPC) or to both national classification and IPC

### B. FIELDS SEARCHED

Minimum documentation searched (classification system followed by classification symbols)
C08L21/00; A41D19/00; A41D19/04; C08K3/36; C08L1/02; C08L71/02; C08L91/00

Documentation searched other than minimum documentation to the extent that such documents are included in the fields searched
Published examined utility model applications of Japan            1922–1996
Published unexamined utility model applications of Japan          1971–2020
Registered utility model specifications of Japan                  1996–2020
Published registered utility model applications of Japan          1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-003210 A (SUMITOMO RUBBER INDUSTRIES, LTD.) 11.01.2018 (2018-01-11) claims 1-3, paragraphs [0005], [0017], [0022], example 1, comparative example 2, table 2, | 1-2, 6-9 |
| Y | claims 1-3, paragraphs [0005], [0017], [0022], example 1, comparative example 2, table 2 | 3-5 |
| Y | JP 2018-505239 A (THE UNIVERSITY OF QUEENSLAND) 22.02.2018 (2018-02-22) claims 1, 16, 40, paragraph [0017] | 3-5 |
| Y | WO 2016/088576 A1 (NIPPON ZEON CO., LTD.) 09.06.2016 (2016-06-09) claim 1, paragraph [0039] | 5 |
| A | JP 2015-094038 A (SUMITOMO RUBBER INDUSTRIES, LTD.) 18.05.2015 (2015-05-18) | 1-9 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June 2020 (25.06.2020) | 07 July 2020 (07.07.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

EP 3 960 811 A1

**INTERNATIONAL SEARCH REPORT**
Information on patent family members

International application No.

PCT/JP2020/017105

| Patent Documents referred in the Report | Publication Date | Patent Family | Publication Date |
|---|---|---|---|
| JP 2018-003210 A | 11 Jan. 2018 | (Family: none) | |
| JP 2018-505239 A | 22 Feb. 2018 | WO 2016/090425 A1 claims 1, 16, 40, paragraph [0015] CN 107108204 A EP 3230201 A1 US 2017/0333602 A1 | |
| WO 2016/088576 A1 | 09 Jun. 2016 | TW 201623350 A | |
| JP 2015-094038 A | 18 May 2015 | (Family: none) | |

Form PCT/ISA/210 (patent family annex) (January 2015)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015094038 A